# EUROPEAN PATENT APPLICATION

(11) **EP 1 248 169 A2**
(43) Date of publication of application: **09.10.2002**
(21) Application number: 02425163.9
(22) Date of filing: 15.03.2002
(51) Int. Cl.: G05B 19/05, G05B 19/414

(54) **A woodworking machine tool and a built-in remote service system**

(30) Priority: 21.03.2001 IT RN20010026
(71) Applicant: SCM GROUP S.p.A., 47900 Rimini (IT)
(72) Inventor: Aureli, Alfredo, 47900 Rimini (IT)
(74) Representative: Lanzoni, Luciano

(57) **Abstract**

A machine tool (1) for working parts (2) made of wood comprises CNC type electronic control means (3) implemented on it, and a communications port (4) for second means (5) of the modem type for transferring data to a remote station, and is characterised in that it further comprises a controller module (6) connected to a user interface (7), to the CNC type control means (3) and to the communications port (4) so as to enable at least the following: the linking up to a remote network server; the retrieval of data from the CNC means (3); the sending of the CNC (3) data and of machine identification data to the remote server through the communications port (4) and through the transmission means (5), so that at least the remote data acquisition and remote diagnosis functions are made possible.

## Description

The present invention relates to a woodworking machine for cutting parts made of wood or similar materials and being preferably of the type with a computer numerical control (CNC) system, or programmable logic controller (PLC), designed to control machine functions. Machines of this kind are frequently found, for example, in the furniture manufacturing industry and can be divided into high-end machines such as large, high-output, high-flexibility machining centres such as machines known in the trade as copiers (essentially consisting of numerically controlled vertical routing and/or boring machines), mid-range machines such as four-face throughfeed moulders for longitudinal moulding of solid wood parts (and which may be combined with end trimming and tenoning units to form corner machining centres) and smaller machines of traditional type such as spindle moulders or low-end vertical routers designed for small craft businesses. Even the smaller machines have in recent years been considerably improved by the addition of state-of-the-art components and features (such as rapid tool change) in order to enhance their productivity and versatility.

The invention relates in particular to a machine of one of the above categories fitted with sensors and electronic circuitry designed to capture machine operating or production data and conditions - including faults - relevant to correct machine operation and/or production process status, and which are capable of automatically interconnecting the PLC or CNC type numerical control unit, the machine-mounted sensors and an interface with a remote data transmission network, in order to send machine data to the network for processing and to receive feedback from the network, thus making it possible to monitor machine operation and rectify faults from a remote station; making it possible, in other words, to provide a remote service for the machine.

Remote service systems today are used for machinery forming part of large installations. It is in the field of industrial installations, especially manufacturing industries, where large, numerically controlled machine tools are used to process raw materials that prior art has up to now developed service systems based on networked data transmission. Thus, machinery constructors provide their customers, who are manufacturing organisations, with a range of facilities whereby the customers are supported in the event of malfunctioning of their machinery while, at the same time, allowing the constructors to automatically collect machine and process parameters from a remote station in quantities sufficient to enable them to formulate a diagnosis not only to solve contingent shutdown situations but also, more important, to remove the causes that led to the shutdown. This capability is very important for the customer but equally, if not more, important for the provider of the service who in many cases has not sold large numbers of identical machines but, owing to the complexity and specialised applications of the installations, has provided customised features in limited numbers of machines (even in single machines) and therefore does not have a sufficient quantity of data available to be able to provide a service that is capable, from the outset, of effectively preventing shutdowns and avoiding the resulting inconvenience and costs.

The remote maintenance and service systems associated with the installations described above are, however, complex and expensive not only in terms of hardware and extent, but also in terms of monitoring and diagnostic capabilities. Thus, the remote maintenance and service system of a large installation is a system whose components are extensively distributed over, and closely linked with, the installation, even in terms of architectural and project features, with all the component integration properties typical of native systems.

Returning to the field of small- and medium-sized machine tools, especially in the sector of woodworking machinery, belonging to the range constructed by the Applicant, it will be noticed that machine-mounted data processing circuitry is currently used almost exclusively for automatically controlling the process cycles performed on the workpieces. In practice, these machines are designed to receive data useful for processing not only in the format of dedicated software but also in the format of commercially available application software. These input data consist of finished part geometry definitions, cutting parameters used during the process cycle, and objects (for example, tools to be used and corresponding settings) selected from databases of objects that can be accessed by the machine.

In addition to the above - and with reference specifically to woodworking machinery in a higher performing class, such as medium- to large-size machining centres equipped with CNC control units (and not just PLCs) - the electronic systems of the machines as currently installed can also perform the function of adjusting machine kinematic parameters by following assigned values or assigned reference ramps as a function of time. This means that the machine is capable of closing the space and speed loops for the kinematic variables controlled, performing computations and generating the signals to drive the power actuators used to correct system motion.

On the subject of electronic systems featured on prior art machines, it should also be stated that conventional electronic architecture installed on medium-size machines, especially less recent, low performance machines, often consist essentially only of a CNC hardware block with its own dedicated user interface (and in most cases the systems are somewhat rigid, with resident software), whereas in more recent, higher performance machines, the CNC block is connected to a PC system through a conventional RS232 type port, and the CNC is programmed using the more user-friendly interface of the PC system.

It may also be added that the PC system installed on the machine cannot alone act as a control unit of the machine, that is to say, it cannot take the place of a CNC unit, and thus a CNC unit (or a PLC) is in any case always required to control the machine.

However, in small-size or low-performance machines, the CNC unit (or the PLC) is not usually assisted by a PC and so operating data are entered through the CNC or PLC interface.

The above is intended as a brief overview of the facilities offered by electronic systems mounted on present-day woodworking machinery and the role of the different components normally featured for data processing purposes.

However, the customary applications, described above, of machines of varying complexity equipped with CNC systems (with or without PC and related user interface) capable of performing the numerical processes required to control machine functions, have the disadvantage that they are not designed to differently handle machine operating and process data. In particular, they cannot process the data in a way that is useful for a remote service system as outlined above, that is to say, as known today on big machines forming part of large installations.

Moreover, the computation systems implemented on the machines are not flexible enough to allow them to be modified or adapted to also provide remote maintenance or remote service functions. The reason for this is twofold. Firstly, the systems described above are usually designed for a strictly defined purpose (also to limit the cost of the machine itself). Secondly, to be able to perform computations of the type envisaged above, the machine must be equipped with appropriate sensors and circuitry especially designed for the purpose.

In line with current marketing philosophy, however, the sale of a product - even one of limited value (automobiles, radio telephones) - is to an ever increasing extent accompanied by the sale of associated maintenance and support services. This, on the one hand increases the profit of the seller and, on the other, relieves the buyer of the task of dealing with problems that require increasingly specialised knowledge. It is not surprising, therefore, that the absence of a built-in computation system capable of dealing specifically and accurately with the remote maintenance and service aspects of a machine represents a notable limitation on the capabilities of machines of the type described above.

Another aspect that should not be overlooked is the importance of a remote service system for the machine constructor/supplier not only, as mentioned above, to enable machine fault data to be acquired automatically, but also to be able to keep track of the exact location of machinery sold indirectly, through dealers, for example. This data constitutes a useful tool of market analysis, given the possibility that in the future the dealership network will be eliminated and the machinery sold directly.

The machine according to the present invention has for an object to overcome the drawbacks due to the shortcomings of the prior art described above. The invention, as characterised in the claims, accordingly provides a machine that implements all functions for collecting current machine or process configuration and fault data detected by machine units, archiving them in a database, sending them to a remote computer server controlled by the mother company and receiving feedback from the computer server, and that may also perform local diagnostic functions.

When a woodworking machine is designed according to the invention, it implements a remote service system, meaning that it reads the variables that describe the configuration of the machine and the status of the process (current and historical data), records the data and sends it (receiving other data, if necessary) to the mother company for diagnosis and correction of faults, whether involving software (in which case the fault may often be corrected directly) or hardware (in which case, instructions are provided to address the fault correctly and the spare parts required automatically ordered from the spare parts warehouse so as to minimise down time due to substitution of parts).

The invention disclosed herein achieves the above mentioned aims through a woodworking machine configuration of the aforementioned type comprising electronic control means implemented on it, being substantially of the CNC or PLC type, and a communications port for second means, being substantially of the telephone or modem type, designed to transfer data to and from the local station and the remote station according to customary protocols and through an external network of a substantially telephone or Internet based type, to which the second means are connected, the novel aspect of the machine lying in the fact that it comprises a controller module connected to a user interface having at least a keyboard and a display and where the controller module is also connected to the CNC or PLC type control means and to the communications port, and is designed to at least:
- enable communication addressing a remote server which is connected to the external network and which has means and programs capable of providing a remote maintenance service for the machine tool, in particular to receive data from the machine;
- enable retrieval, from the CNC or PLC electronic control means of the machine tool, of data relating to machine or process status;
- enable sending of the data - and of machine or user identification data - to the remote network server through the communications port and through the second means connected to the external network, so that at least the remote data acquisition and remote diagnosis functions are made possible.

Other novel features of the present invention lie in the fact that the controller module can also display on the user interface data that translates, for example, the CNC error messages, or other data such as user access information or process data, enabling all this data to archived in a historical file, also sent to the remote server.

Still further novel features lie in the fact that the machine tool can be equipped with sensors designed to detect quantities relating to its operation, status, or productivity, the sensors being connected to the controller module either directly or through the electronic CNC/PLC control unit. Moreover, the controller module may also enable the remote server of the mother company to directly access the sensors, the electronic CNC/PLC control unit and the machine drive units, enabling the units to be remotely read and programmed.

In the machine according to the invention, the controller module may also locally run diagnostic software installed in the machine and make the diagnostic data available for sending to the remote server.

In addition, the second means for sending the data to the external network may be part of the machine tool and may simply consist of a terminal suitable for operating on GSM cellular telephone networks.

Therefore, by using a machine configuration of the type according to the invention, that is to say, by introducing the controller module which coordinates the data flow between the different parts of the machine - namely, sensors, CNC/PLC, user interface, network connection means, etc. - the data describing machine operating faults and data relating to the production process can be shared in real time with the service department of the mother company working from a remote station. The remote service department may thus formulate a diagnosis and take appropriate action to restore the machine to working order in the event of a stoppage. If the problem is due to the software, corrective action may be taken directly from the remote station using the direct access function for reading and programming the machine units. If, on the other hand, the problem is due to a hardware part, the spare parts required to correct the fault may be ordered promptly from the mother company's warehouse. In both cases, the procedures to be followed are easy and can be implemented immediately.

The advantages brought by the present invention lie essentially in the fact that the controller module which coordinates the different parts of the machine can be used to implement a remote service function even on traditional machine architectures by making just a few minor modifications to the existing parts, in practice limited to the provision of an interface for connecting the components to each other and to the controller module so as to enable reciprocal data flows which, although they were available on the components prior to the disclosure of the present invention, were not activated, implemented or applied to the field of remote service systems. Since the controller module and the other modules added to an ordinary woodworking machine tool to provide it with remote service functions consist of relatively low cost components, they can advantageously be used in modular assemblies and without significantly altering the control software, that is to say, without modifying the simplicity and stability of the application to implement the remote service function on machines of practically any kind. This is not possible with the native type systems used in large installations up to the present time.

Thus, the controller module constitutes a significant improvement in any woodworking machine tool, even a small one used in a craft business, which adds an important feature - as the remote service function undoubtedly is - of great interest not only to the buyer, because it allows uninterrupted trouble-free operation of the machine itself and automatic upgrading of the software used by the machine, but also for the machine constructor because it allows the constructor to collect data relating to machine fault rates in relation to specific configurations, to obtain information about end market areas where the machinery is sold, and to offer a much more efficient service by significantly reducing service response times and maximising diagnosing capabilities.

The invention will now be described with reference to the accompanying drawings, which illustrate preferred embodiments of the invention purely by way of example, without restricting the scope of the inventive concept, and in which:

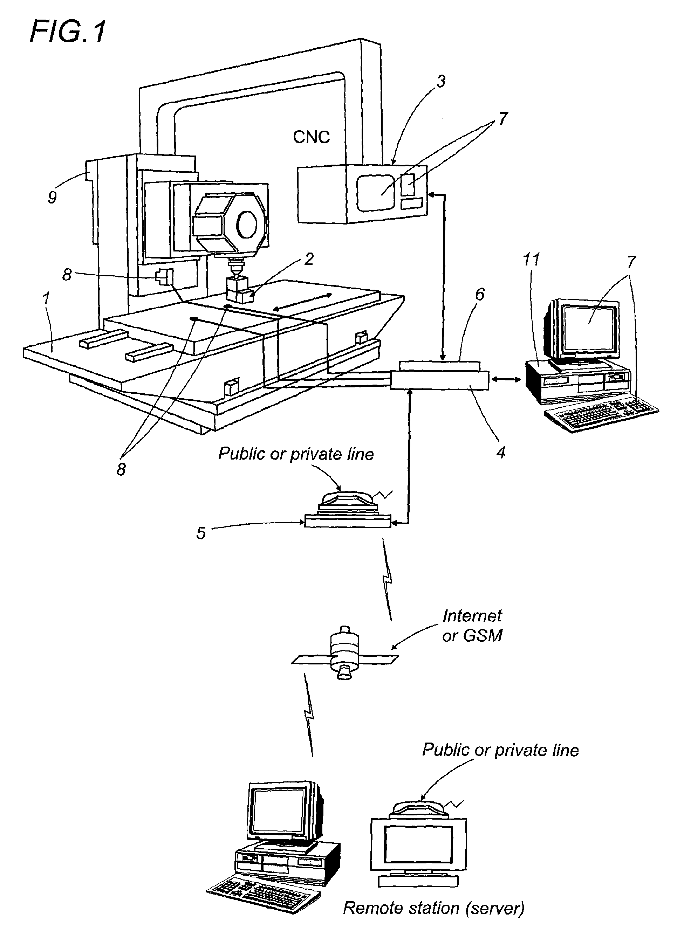

- Figure 1 is a view of the machine tool 1 in its entirety and of a part 2 being worked; it shows the CNC machine control unit and the controller module 6, which is interfaced with the CNC, with the user interface 7 and the related mass storage units 11, with the sensors 8 and with the network connection means 5; the illustration shows the sensors 8 designed to read bar codes to automatically recognise the workpieces (the sensors mounted on the worktable) and the tools (the sensors mounted in the tool change area); in short, Figure 1 shows the interconnections between the different parts of the machine and the external communications network;

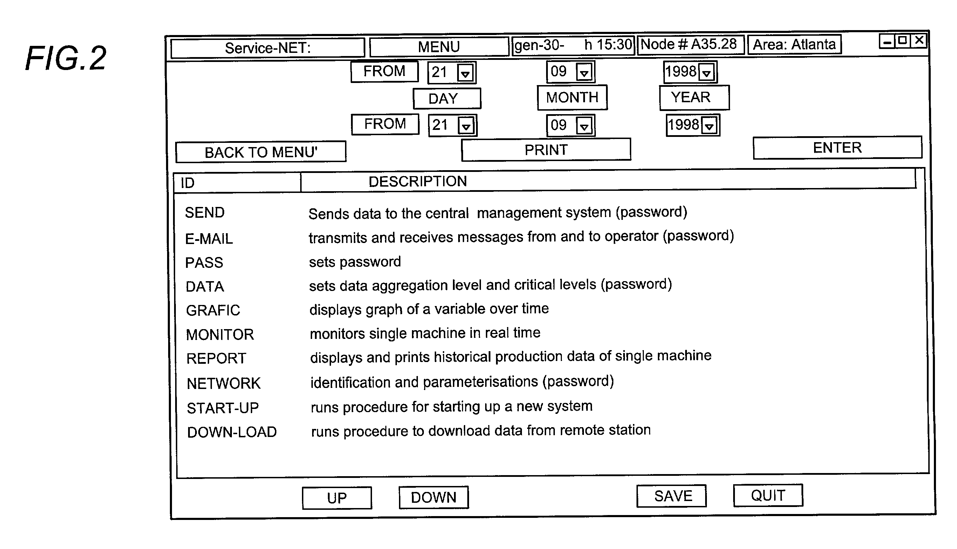

- Figure 2 illustrates a typical dialog box showing a menu available in the user interface 7; this dialog box is displayed and made operative by the controller module 6;

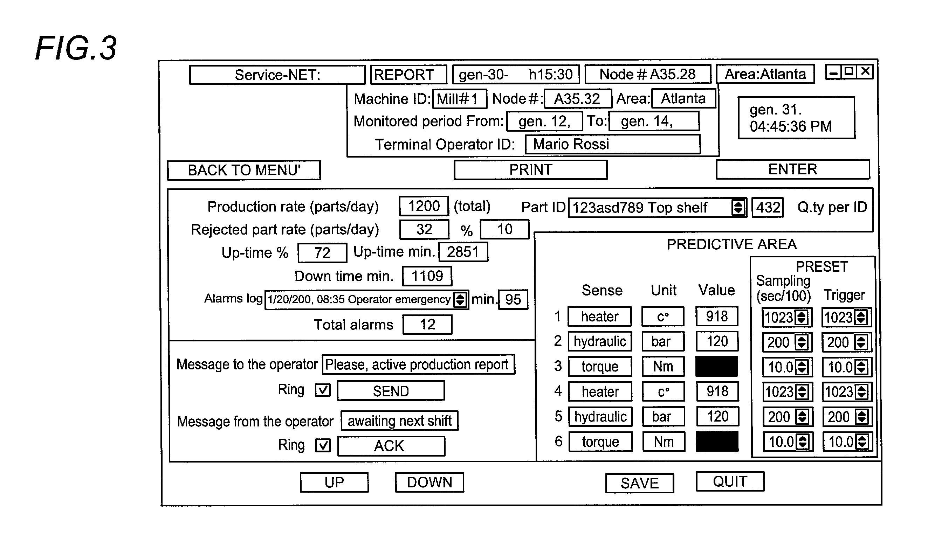

- Figure 3 shows another dialog box that can be invoked from the menu shown in Figure 2 and that contains machine production data, as well as the current status of certain process variables;

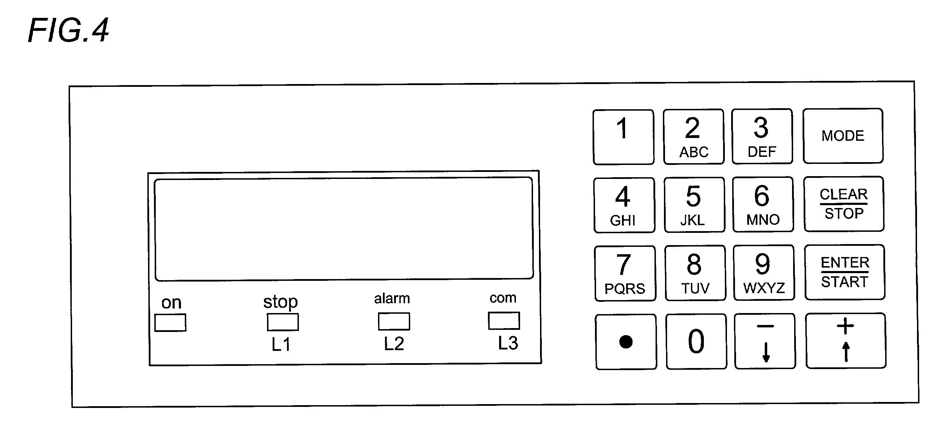

- Figure 4 shows a user interface 7 of extremely simple type, including a display and a keypad with a set of function keys, including the "com" key that is used to connect up to the external network to allow dialogue with the mother company's server. The numeral 1 denotes in its entirety a machine tool for working parts 2 made of wood and whose basic architecture is substantially the same as other well known machines of the same kind, but whose performance presents numerous innovative features thanks to machine-mounted electronic circuitry providing improved capacity for machine configuration and production process data flow management, as described in more detail below. The preferred embodiment described relates to a woodworking machine 1 for craft businesses with a mid-range production volume, for example a high-end routing machine with a CNC unit 3 (also known as copier in the jargon of the trade), although it will be understood that the description may also apply to smaller machines designed more specifically for small craft businesses and where a PLC is used instead of the CNC unit. The machine is equipped with a control unit (the CNC unit) which controls all the operating parameters of the machine and uses feedback to adjust these parameters to guarantee correct tool movements.

Besides the CNC unit, the machine 1 made according to the invention is equipped with additional hardware, constituting the core of the invention and consisting of a controller module 6 designed to coordinate the flow of data between the different logical and functional units of the machine. The module will not be described in detail in terms of its construction since it is based on well-known rules of microchip design, but rather in terms of its operativeness in relation to the functions it performs, as described below. The controller module 6 is connected to the CNC unit 3 and to the user interface 7 (not only CNC keypad and display but also auxiliary keyboard and display), as well as to the external network connection means 5.

The controller module 6, again with reference to the preferred embodiment being described, belongs to the category of embedded microcontrollers, with on-chip functional modules (for example, Hitachi® H8F3048 or similar devices). Its main features, therefore, are firmware flash memory on-board reprogrammability and integration with serial communications lines, and it is capable of enabling a full set of functions, whose characteristic features form the subject matter of the appended claims, for connecting the different logical and functional units of the machine.

For the purposes of the present invention, the machine 1 is also equipped with a set of sensors 8 designed to measure quantities describing its instantaneous configuration and to read bar codes identifying the workpieces 2 being processed (the sensors mounted on the work table) and the tools currently used. The sensors 8 are connected to the controller module 6 (and through it to the CNC unit 3) and the signals they generates are used by both the controller module 6 and the CNC unit 3.

Obviously, the communications functions mentioned above are usually of the two-way type between the different units of the machine and are enabled by the controller module 6. Thus, the controller module 6 can access the machine units to retrieve data from them or to enter data in them, as, for example when new software versions are installed in the machine's CNC unit 3. Through the CNC unit, the drive units 9 on the machine 1 can also be accessed. In addition, the controller module 6 can also enable storage of data in the mass storage unit 11.

The macro structure of the hardware system is represented in Figure 1, showing schematically or as blocks the CNC unit 3, the controller module 6 with the communications port 4 for the modem 5, the mass storage units 11, the keyboards and the displays of the user interface 7, the sensors 8, the modem 5 for connecting up to the external data transmission network. The interconnections between them are also shown.

The software residing in the controller module 6, acting in conjunction with the sensors 8 mounted on the machine 1, enables a flow of data to be established between the different machine units and the remote station in order to perform remote service functions. The general features of the system which enable this to be done are described below.

The interface between the software and the user has a substantially tree-like structure consisting of a home page with an introductory menu which provides access to a main menu, constituting the "root" of the system, and appearing on the display of the local user in a main menu window containing the options shown in Figure 2 and listed below:

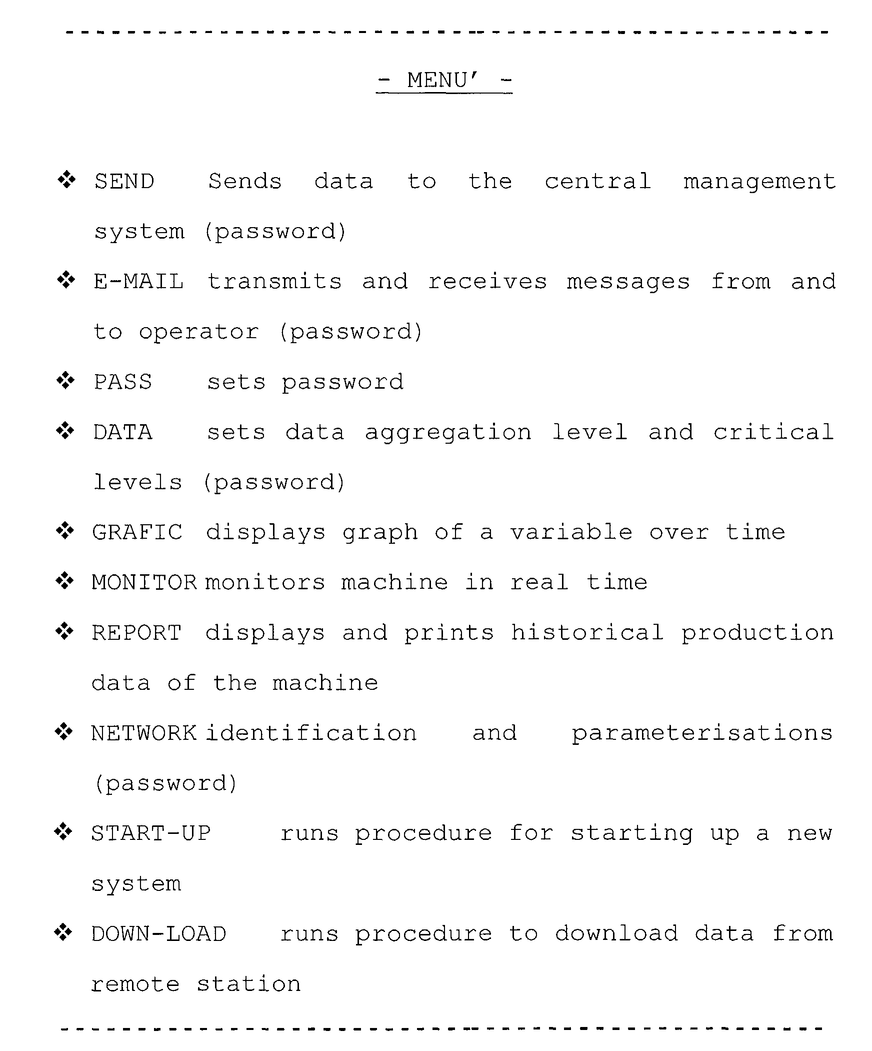

The remote service system will now be described in more detail with reference to the individual menu items and with the help of the accompanying drawings. Each item in the menu can be selected by pressing the [Enter] key in the main menu window and provides access to a dialog box (constituting a branch of the tree structure) in which the selected function can be performed.

### Send:

This menu item is used to send machine data to the remote station. The data may be current data or historical data retrieved from the machine's mass storage unit. Before data can be sent, the two stations must be connected up to and must identify themselves to each other (see "Network" below).

### E-Mail:

This menu item runs an application to send/receive electronic mail to and from the local and remote stations.

### Pass:

This menu item runs an application enabling dialog between the local and remote stations, that is to say, a dialog box in which a new password for communications between the local and remote stations can be set.

### Data:

This menu item allows machine production data for a specified period to be statistically processed. The sets of products and time intervals whose data is to be processed can be selected in a dialog box. This means that the aggregation level of the data to which the statistical reports will refer can be determined (for example, total production, or production by category, by single article, and so on).

### Grafic:

This menu item, which may be used in conjunction with the previous one, makes it possible to create and display graphs representing the progress over time of a machine production variable, for example, the statistical reports defined using the "Data" option.

### Monitor:

This menu item can be used to read real time data detected by the machine-mounted sensors. The data can then be saved and printed.

### Report:

This menu item can be used to display and print historical data relating to the production process. The dialog box in which the data is displayed is illustrated in Figure 3 and described below. The description also applies, with the necessary alterations, to the other dialog boxes opened by the other main menu options.

The top of the "Report" dialog box shows the user's identification details and the time period set previously in the preceding dialog box (that is, the one in the main menu already described, using the [From]/ [To], [Day]/[Month]/[Year] buttons).

The middle section of the "Report" dialog box enables selection of the product identifier (ID) and provides parameters such as quantity produced for that ID, average production in parts/day, average number of rejects per day, use of the machine expressed both as a percentage of the day and in minutes per day, information regarding duration and number of stoppages due to emergency conditions, relating to production of that part.

The lower left-hand portion of the "Report" dialog box is a message area where an incoming message from the remote station can be read (or a message sent to the remote station) without going to the "E-mail" function in the main menu.

The lower right-hand portion of the "Report" dialog box is a predictive area where the values measured by the machine-mounted sensors (temperature in {C}, pressure in {bar}, torque in {Newton*metres}, etc) are displayed, and where, for each sensor, the sampling mode of the dimension measured can be adjusted (sampling, trigger).

### Network:

This menu item is used to connect the machine to the external data transmission network and to the remote server of the mother company that manages the remote service. It runs the procedures by which the local and remote stations identify each other and sends the identification details of the machine and/or user from the local station to the remote station.

### Start-Up:

This menu item displays a submenu from which several applications can be run, for example to install new software versions downloaded from the remote server or to start diagnostic programs on the machine or on the process or to retrieve or store data from and to the mass storage units, etc.

### Download:

This menu item is used to download data - usually new software versions to be installed in the machine - from the remote server to the local machine.

In addition to the above buttons used to set the report time interval, the main menu includes a number of other buttons, which are described briefly below and many of which also appear in other dialog boxes:
[Back To Menu]: returns to the introductory menu on the home page of the software.
[Print]: enables printing functions.
[Enter]: confirms selected parameters.
[Up]: moves up one level in the tree structure of the menu.
[Down]: moves down one level in the tree structure of the menu.
[Save]: saves the current setting of the window and uses it as the default setting the next time the window is opened.
[Quit]: exits the remote service program.

The control of these dialog boxes and functions in terms of the software programming required to obtain them is not discussed here since it falls well within the field of prior art and is well known to experts in the sector of information technology.

Operatively, on the other hand, the remote service management method implemented on the machine can be used to control the following types of functions:
- Enabling communication addressing the remote server of the mother company on the Internet, from which the remote service program is managed and on which the remote maintenance programs are run.
- Enabling retrieval, from the CNC unit 3, of data relating to machine or process status, and enabling it to be sent to the remote server through the communications port 4 implemented on the controller module 6, and through the modem 5.
- Enabling machine or process diagnostic messages (for example, error messages) to be displayed on the user interface 7 and archived in the mass storage unit 11. This means that a historical data file can be subsequently sent to the remote server.
- Enabling read and write access (for reprogramming purposes) to the machine 8 and to the drive units 9.
- Enabling the local diagnostic software resident in the machine to be run locally.

The controller module 6 also implements other auxiliary functions, such as a simple encrypting application to guarantee data transmission integrity and authenticity, the possibility of local system response on call from the remote server of the mother company (activation of local system "on call" feature, thus also enabling data transmission to the remote server). Lastly, the controller controls auxiliary functions of the user interface 7, in particular enabling voice transmission through microphone and loudspeaker, and image transmission through webcam and screen, for operation in multiparty teleconference mode.

Thanks to the facilities offered by the system structured in this way, a local operator faced with a fault in machine operation can proceed in any of several different ways to deal with the problem using the remote service offered by the controller 6 on the machine itself.

First of all (see Fig. 4), a "quick link" can be established with the remote server of the mother company by simply pressing the "com" key on the user interface 7, which alone starts the remote service of the controller module and enables the functions normally invoked from the "Network" option of the main menu. This option, must, however be used the first time the machine is linked to the remote server, in order to store the identification details of the local user.

Once the link has been established, the operator may - using an option of the "Start-Up" command in the main menu - run the general diagnostic program residing in the remote server of the mother company and wait for the related report to be displayed on the screen of the local station. This gives the remote server direct read access to the sensors, drive units, CNC unit, etc. If a fault is detected during the diagnostic stage and the fault can be rectified to restore correct machine operation by direct action on the software, the diagnostic report may include an option, to be selected by the local user, which gives the remote server direct access, this time in programming mode, to the various machine units just mentioned.

In the meantime, using the "E-mail" option in the main menu, the local user may also send text messages (with files attached, if necessary) containing further useful information enabling the mother company to provide a prompt and efficient response.

During these links, which obviously include the identification of the caller, the mother company receives, as a by-product, information about the location of the local user and on the fault rate and productivity of the machinery used by the local user. As mentioned above, this information may have great strategic importance.

Using another subcommand, also accessible from the "Start-Up" command in the main menu, the local user may also opt to run the diagnostic program residing locally in the machine, obviously in the currently installed version, and to subsequently send the results of the local diagnosis to the mother company using the "Send" function from the main menu.

To update the local diagnostic program or any other software component that can be installed in the local machine, for example the one used to control the drive units, the local user can select the "Download" command from the main menu to access the software library in the server. A function accessible from the "Start-Up" command in the main menu then starts an "install-shield" type subroutine which installs the software update, dividing the update data packages as required between the different units of the local system.

On the basis of the diagnostic results processed by the local machine system or by the remote system using the data sent to it by the local system, the mother company may formulate suitable corrective measures, which may vary in complexity and which, if they involve only software, may consist in directly accessing the local system to reprogram machine units - for example the drive units or the CNC unit - using substitute software modules or updates. If, on the other hand, the fault involves a piece of hardware or other mechanical part, arrangements can be promptly made to despatch the necessary spare parts or to send skilled maintenance personnel.

Apart from troubleshooting, the local remote service program also offers functions not only to monitor the state of the local machine system and of related equipment - using the "Monitor" option in the main menu - but also to keep track of the production process - using the "Grafic" and Report" commands from the same menu.

Lastly, brief mention is also made below of the data which the controller module 6 can obtain from the machine-mounted sensors 8 or from the machine's CNC unit 3, and which contribute to completing the data that can be obtained by invoking the "Monitor" function (machine status) and the "Grafic" and "Report" functions (historical statistical summaries). These data are mainly the following:
- Type of tool (identification code).
- Spindle rpm.
- Working tool path.
- Working tool machining time.
- Total machining time
- Set-up time.
- Number of workpieces machined.
- Time for machining one batch.

The woodworking machine made according to the invention as described above, with the controller module 6 controlling the flow of data between the existing machine units and enabling connection with the remote service server, achieves the preset aims thanks to the controller module 6 itself and to the interactions it creates between the different parts of the system through the program implemented on it. The machine 1 can thus be included in a remote service system without having to significantly modify its basic existing structure.

The invention described can be subject to modifications and variations without thereby departing from the scope of the inventive concept. Moreover, all the details of the invention may be substituted by technically equivalent elements.

## Claims

1. A machine tool for working parts (2) made of wood or similar materials, the machine (1) comprising electronic control means (3) being substantially of the CNC or PLC type implemented on the machine (1), and a communications port (4) for means (5), being substantially of the telephone or modem type, designed to transfer data to and from the local station and the remote station according to customary protocols and through an external network of a substantially telephone or Internet based type, to which the means (5) are connected,
the machine being **characterised in that** it comprises a controller module (6) connected to a user interface (7) having at least a keyboard and a display, the controller module (6) being connected to the means (3) and to the communications port (4) and being designed to at least:
- enable communication addressing a remote server which is connected to the external network and which has means and programs capable of providing a remote maintenance service for the machine tool (1), in particular to receive data from the machine tool (1);
- enable retrieval, from the CNC or PLC electronic control means (3) of the machine tool (1), of data relating to machine or process status;
- enable sending of the data - and of machine or user identification data - to the remote network server through the communications port (4) and through the second means (5) connected to the external network, so that at least the remote data acquisition and remote diagnosis functions are made possible.

2. The machine tool according to claim 1, **characterised in that** the communications port (4) is built into the controller module (6).

3. The machine tool according to claim 1 or 2, **characterised in that** the controller module (6) displays data that translates error messages issued by the CNC or PLC unit, or other data such as user access information or process data, on the user interface (7) and archives it on an appropriate storage unit (11), enabling a historical file containing this data to be sent to the remote network server when a link is established with it through the communications port (4) and through the data transfer means (5).

4. The machine tool according to any of the foregoing claims, **characterised in that** it comprises sensors (8) for measuring quantities describing machine operation or productivity, the sensors (8) being connected to the controller module (6) or to the CNC or PLC type electronic control means (3).

5. The machine tool according to any of the foregoing claims, **characterised in that** the controller module (6) allows the remote server connected to the external network direct read access to the measuring sensors (8) or to the CNC or PLC type electronic control means (3) implemented on the machine or to the machine drive units (9), so that local system data can be read directly by the remote system.

6. The machine tool according to any of the foregoing claims, **characterised in that** the controller module (6) allows the remote server connected to the external network direct write access to the measuring sensors (8) or to the CNC or PLC type electronic control means (3) implemented on the machine or to the machine drive units (9), so that the local units can be programmed directly by the remote system.

7. The machine tool according to any of the foregoing claims, **characterised in that** the controller module (6) enables running of a diagnostic program installed in the machine (1) to locate faults locally, and where the controller module (6) also enables the results of the diagnosis to be transmitted to the remote network server when it is connected through the communications port (4) and through the data transfer means (5).

8. The machine tool according to any of the foregoing claims, **characterised in that** the means (5), consisting substantially of a telephone or modem, designed to transfer data between the local and remote systems according to customary protocols, also form part of the machine (1).

9. The machine tool according to claim 7, **characterised in that** the means (5) built into the machine (1) consist of a telephone terminal working in cellular telephone networks compatible with the Gsm telephone standard.

10. The machine tool according to any of the foregoing claims, **characterised in that** there is implemented in it an encrypting algorithm designed to guarantee data integrity and authenticity during communication with the remote server network.

11. The machine tool according to any of the foregoing claims, **characterised in that** the controller module (6) is designed to enable communication - and related data transmission functions - with the remote network server, even following a command issued by the remote network server itself, through a preset identification signal sent by the server during the call.

12. The machine tool according to any of the foregoing claims, **characterised in that** the controller module (6) enables strings of characters from the remote network server addressed to the local operator to be displayed on the display unit of the user interface (7), so that a remote message receive function can be supported.

13. The machine tool according to any of the foregoing claims, **characterised in that** it comprises peripherals (10), such as a microphone/loudspeaker and a webcam/screen, designed to receive/transmit voices and images and **in that** the controller module (6) enables the transmission/reception of voices and images during communication with the remote network server, so that multiparty conferencing and teletraining functions can be supported.

14. The machine tool according to any of the foregoing claims, **characterised in that** the controller module (6) enables communication with the remote network server by operation of a single command on the keyboard of the user interface (7).
